# Europäisches Patentamt

# European Patent Office

# Office européen des brevets

(19)

(11) Numéro de publication: **0 072 747**
**B1**

(12)

# FASCICULE DE BREVET EUROPEEN

(45) Date de publication du fascicule du brevet:
**10.12.86**

(51) Int. Cl.⁴: **F 16 C 32/04**, H 02 K 7/09, H 02 K 7/02

(21) Numéro de dépôt: **82401509.3**

(22) Date de dépôt: **10.08.82**

(54) Equipement pour le stockage de l'énergie sous forme cinétique et la restitution de celle-ci sous forme électrique.

(30) Priorité: **17.08.81 FR 8115831**

(43) Date de publication de la demande:
**23.02.83 Bulletin 83/8**

(45) Mention de la délivrance du brevet:
**10.12.86 Bulletin 86/50**

(84) Etats contractants désignés:
**AT BE CH DE GB IT LI NL SE**

(56) Documents cités:
**DE - A - 2 114 040**
**DE - A - 2 500 211**
**FR - A - 1 475 945**
**FR - A - 2 384 174**
**FR - A - 2 399 758**
**FR - A - 2 413 578**
**FR - A - 2 451 595**
**GB - A - 1 268 429**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Benedetti, Alain, 2, rue des Annonciades, F-78250 Meulan (FR)**
Inventeur: **Laury, Luc, 22, rue de la Pacaterie, F-91400 Orsay (FR)**
Inventeur: **Legrand, Francis, 11, rue de l'Etang, F-78150 Rocquencourt (FR)**
Inventeur: **Poubeau, Pierre, 6, Allée du Bois, F-78230 Le Pecq (FR)**
Inventeur: **Weisser, Bernard, 7, rue Salvador Allende, F-78480 Verneuil sur Seine (FR)**

(74) Mandataire: **Rinuy, Guy et al, Cabinet Rinuy et Santarelli 14, Avenue de la Grande Armée, F-75017 Paris (FR)**

## Description

La présente invention concerne de façon générale l'obtention d'une source d'énergie électrique sans coupure, et, particulièrement, implique l'utilisation de volants d'inertie pour réaliser une telle source dans un champ de gravité, au sol principalement.

Des configurations de volants d'inertie suspendus magnétiquement sont décrites notamment dans le FR-A-2 257 077 du 3 Janvier 1974 et son premier certificat d'addition le FR-A-2 294 430 du 10 Décembre 1974 ainsi que dans le FR-A-2 384 174 du 15 Mars 1977 de la même Société demanderesse.

Ces brevets concernent des volants d'inertie qui peuvent être utilisés pour la commande de l'attitude des satellites et/ou pour stocker de l'énergie pour les satellites, ainsi que, bien sûr, pour toute application du volant d'inertie compatible avec sa forme et son principe de base.

Le FR-A-2 257 077 et son certificat d'addition FR-A-2 294 430 (ou le brevet allemand correspondant DE-A-2 500 211) proposent ainsi un équipement à rotor suspendu magnétiquement comportant un dispositif de centrage magnétique radial passif, un dispositif de centrage magnétique axial actif, un détecteur de vitesse axiale, un détecteur de position axiale pour la commande du dispositif de centrage magnétique axial actif, un dispositif d'amortissement et un moteur-générateur.

Le concept de base de la présente invention est orienté vers une application au sol des volants d'inertie suspendus magnétiquement ayant quelques-unes des caractéristiques des systèmes décrits dans les brevets antérieurs en même temps que des caractéristiques nouvelles prévues pour des applications au sol de ces volants d'inertie, prenant en compte la gravité et les arrêts et redémarrages desdits volants.

L'un des buts de l'équipement selon la présente invention est de pouvoir stocker de l'énergie utile dans une gamme allant jusqu'à au moins 1 kilowatt-heure, qui peut être augmentée en augmentant le poids et les dimensions de l'équipement, avec une puissance d'entrée et de sortie de 6 KW qui peut être augmentée également dans le cadre de la présente invention, de la même manière que l'énergie peut être accrue.

La présente invention concerne un équipement de stockage de l'énergie et plus particulièrement un rotor suspendu magnétiquement qui accumule l'énergie sous la forme cinétique quand il est entraîné en rotation par un moteur électrique et qui restitue cette énergie sous forme électrique par l'intermédiaire d'un générateur électrique impliquant la décélération du rotor, cet équipement comprenant une partie rotor et une partie stator.

Le fonctionnement de l'équipement implique généralement, mais non nécessairement, le maintien du rotor dans un environnement sous vide et dans ce but le boîtier qui supporte le stator et le rotor peut être une enceinte étanche dans laquelle on a fait le vide.

Additionnellement, le moteur, le générateur et la suspension magnétique fonctionnent associés à des circuits électroniques, qui sont placés généralement en dehors de l'enceinte étanche mais qui peuvent également être introduits dans celle-ci.

Fondamentalement, la présente invention comprend un volant d'inertie comme source d'énergie sans coupure stockant de l'énergie sous la forme cinétique, l'énergie étant introduite et restituée sous forme électrique, le volant étant supporté magnétiquement par des anneaux magnétiques de centrage passif radial associés à un actuateur axial séparé du centrage magnétique radial et constitué par un double électro-aimant polarisé, l'actuateur axial étant commandé par une boucle d'asservissement fonctionnant à partir d'un détecteur de vitesse axiale comportant des moyens logiques de contrôle de décollement et ne comportant pas de détecteur de position.

L'invention propose ainsi un équipement à volant d'inertie comme source d'énergie sans coupure stockant de l'énergie sous forme cinétique, l'énergie étant introduite et restituée sous forme électrique, du type comprenant, dans une enceinte, un rotor suspendu magnétiquement par rapport à un stator, un volant d'inertie faisant partie du rotor, un dispositif d'amortissement pour empêcher des excursions radiales excessives du rotor et comportant des aimants permanents opposés et un élément de centrage passant entre eux, un moteur et un générateur, des paliers d'appui entre le stator et la rotor pour supporter le rotor lorsque celui-ci n'est pas suspendu magnétiquement, le dispositif pour suspendre magnétiquement le rotor et le maintenir en équilibre par rapport au stator comprenant:

  – un ensemble de centrage magnétique radial passif comportant des aimants permanents annulaires sur le stator opposés à un nombre équivalent d'aimants permanents annulaires sur le rotor,

  – un ensemble de centrage magnétique axial actif formé d'un électro-aimant et d'un aimant permanent annulaire,

  – un détecteur de vitesse axiale et,

  – une boucle d'asservissement reliant les bobines électromagnétiques de l'ensemble de centrage magnétique axial avec les bobines du détecteur de la vitesse axiale pour maintenir le rotor entre ses paliers d'appui,

  – cet équipement étant caractérisé en ce que, le rotor étant placé dans un champ de gravité non compensé par une force centrifuge,

  – les aimants permanents annulaires de l'ensemble de centrage magnétique radial passif sont disposés en sorte d'exercer sur le rotor une force axiale permanente de soulèvement à l'encontre de la gravité,

  – l'ensemble de centrage magnétique axial actif est formé d'un double électro-aimant, et l'aimant permanent annulaire est monté sur le rotor entre deux bobines électromagnétiques montées sur le stator,

  – le détecteur de vitesse axiale du rotor comporte un circuit magnétique cylindrique attaché au rotor et dans l'entrefer duquel est logé un cylindre à deux bobines fixé au stator, tout mouvement axial du circuit magnétique produisant des forces électromotrices qui s'ajoutent dans les deux bobines et

– la boucle d'asservissement comporte des moyens logiques de contrôle de décollage capables, lorsque le rotor est en appui sur l'un des paliers d'appui de commander un courant dans cette boucle, à partir de la réaction du détecteur de vitesse axiale dans un sens propre à dégager effectivement le rotor vis-à-vis de ce palier d'appui sur lequel il repose.

En fait on connaît déjà des moyens de contrôle de décollage pour le décollage d'un rotor vis-à-vis de paliers, d'après le document FR-A-2 413 578 notamment, mais ces moyens sont commandés en fonction de la position du rotor, et non pas de sa vitesse, au travers de multiples circuits électroniques spécifiques.

Les avantages de la présente invention apparaîtront plus clairement de la description suivante de formes particulières de réalisation, qui est faite en référence aux dessins annexés sur lesquels:

– la figure 1 représente schématiquement une vue d'ensemble du système selon la présente invention, comportant des détails qui sont montrés à une plus grande échelle dans les figures suivantes;

– la figure 2 est un diagramme schématique d'une boucle d'asservissement électrique avec la logique de décollement;

– la figure 3 illustre une configuration de base des anneaux de centrage radial;

– la figure 4 illustre une variante de configuration des anneaux de centrage radial de la figure 3;

– la figure 5 est une vue de l'actuateur axial de l'équipement selon la présente invention;

– la figure 6 représente le détecteur de vitesse axiale selon la présente invention;

– les figures 7 et 8 illustrent le sous-ensemble d'amortissement utilisé dans l'équipement de la présente invention;

– la figure 9 montre l'amplification des forces électromotrices dans le sous-ensemble d'amortissement des figures 7 et 8;

– la figure 10 montre une variante du système magnétique d'amortissement;

– la figure 11 montre un moteur associé au fonctionnement du rotor, semblable à un générateur compris également dans le présent équipement;

– la figure 12 illustre une partie d'une forme de réalisation d'une enceinte à vide utilisable pour contenir l'objet de la présente demande;

– la figure 13 est une vue d'ensemble d'une variante de configuration de la présente invention représentée sur la figure 1;

– les figures 14 et 14A, complémentaires pour la clarté du dessin, représentent en coupe une variante de configuration d'ensemble dans laquelle le rotor est plein et l'arbre associé à ce rotor est tournant; et

– la figure 15 est un schéma montrant les dispositifs d'amortissement radiaux de ce rotor plein.

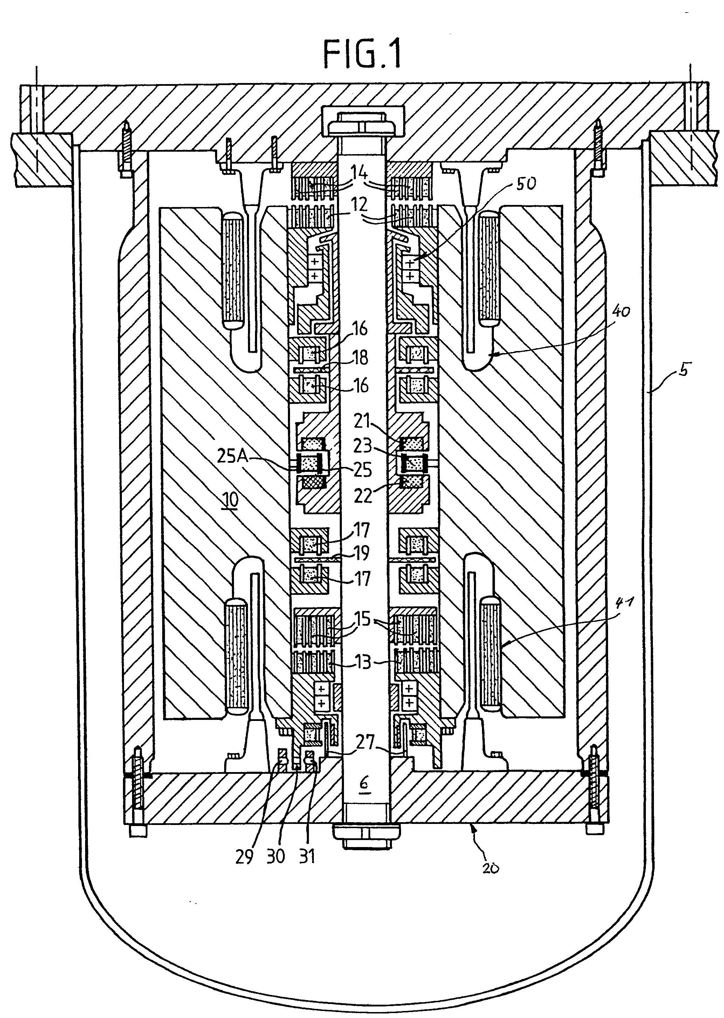

Comme le montre la vue d'ensemble de la figure 1, le rotor 10 qui est l'élément stockant l'énergie comporte un cylindre en acier, lequel peut être supporté de deux façons différentes:

– en fonctionnement normal, il est supporté magnétiquement par une suspension magnétique et il n'y a aucun contact mécanique entre les parties rotatives de l'équipement et les parties non rotatives;

– lorsque le système n'est pas en fonctionnement ou lorsque la suspension magnétique n'est pas activée pour une raison quelconque, le rotor vient en contact avec les paliers d'appui 50, qui sont constitués par des roulements à billes.

Les éléments suivants sont fixés au rotor en acier:

– les éléments rotatifs de la suspension magnétique,

– les circuits magnétiques du moteur 40 et du générateur 41 ainsi que l'anneau de commutation du moteur, et

– la partie rotative des paliers d'appui inférieur.

Les éléments suivants sont fixés au boîtier:

– les éléments fixes de la suspension magnétique,

– les bobines magnétiques sans fer du moteur et du générateur,

– les détecteurs qui produisent les signaux pour la commutation électronique du moteur,

– des détecteurs complémentaires pour la surveillance des températures et de la pression, si nécessaire, et

– les prises fournissant l'entrée et la sortie de la puissance électrique et des signaux de surveillance.

L'enceinte à vide 5 est généralement fermée hermétiquement par soudage (par exemple, soudage par faisceau électronique, soudage à l'étain, ...). Elle peut également être munie d'un système lui permettant d'être ouverte tout en évitant une entrée de gaz et d'un système de Getter absorbant les gaz résiduels, le dégazage des matériaux et les vapeurs émises par les matériaux inclus dans l'enceinte à vide.

La forme de réalisation de la présente invention telle que représentée sur la figure 1 montre la source de puissance incluse dans une enceinte à vide qui est prévue pour une installation en-dessous de la surface du plancher ou du sol pour obtenir une sécurité supplémentaire.

Dans cette forme de réalisation, l'élément 10 est un rotor en acier auquel sont fixés des anneaux magnétiques de centrage 12 et 13. D'autres anneaux magnétiques 14 et 15 sont fixés au stator respectivement en face des anneaux du rotor. Ces anneaux de centrage du rotor par rapport au stator réalisent ensemble deux fonctions:

– ils fournissent une force radiale de rappel lorsque l'axe magnétique des anneaux de centrage du rotor est décalé par rapport à l'axe magnétique des anneaux du stator, et

– ils fournissent une force axiale qui peut être rendue égale au poids du rotor pour maintenir un entrefer approprié entre les anneaux du rotor et du stator.

Le centrage radial est complété par un système d'amortissement radial comportant des éléments de rotor 16 et 17 et des éléments de stator 18 et 19.

Le maintien permanent de l'entrefer approprié est réalisé par une boucle d'asservissement créant des forces commandées dans la direction axiale.

La position dans laquelle l'attraction de l'anneau magnétique est égale à la force de la pesanteur sur la masse du rotor est une position d'équilibre qui en elle-même est instable. Le système a besoin d'une boucle d'asservissement pour faire revenir le rotor vers sa position d'équilibre lorsqu'il s'en éloigne.

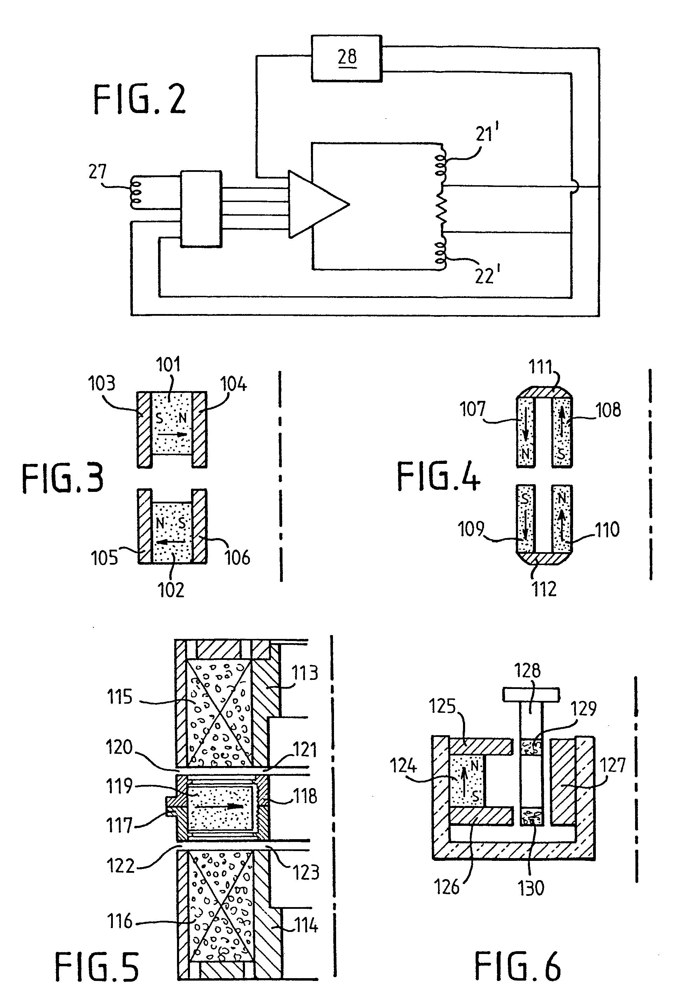

Les forces nécessaires sont produites par un double électro-aimant 21, 22 fixé à l'arbre central fixe. Le circuit magnétique de cet électro-aimant double est polarisé par un anneau magnétique permanent 23 dans une armature mobile 25–25A fixée au rotor. Etant donné le circcuit magnétique de polarisation illustré à la figure 2, le même courant s'écoule dans les deux bobines de l'actuateur 21' et 22' et selon la direction du courant la force sur l'armature mobile 25–25A est dans l'une ou l'autre direction. L'amplitude du courant est commandée à partir du signal de bobines d'un détecteur 27 qui mesure la vitesse du mouvement axial du rotor, en plus d'un signal de contre-réaction proportionnel au courant lui-même, chaque signal étant adapté en gain et en phase comme il est habituel dans toute boucle d'asservissement.

Pour le fonctionnement initial de décollement des butées, lorsque le rotor repose sur les paliers d'appui, des moyens de contrôle de décollage 28, désignés ci-dessous en raccourci par logique de décollement, entrent en action. Leur fonctionnement est le suivant: la boucle d'asservissement de la figure 2 n'est pas stable sans la présence du signal de vitesse axiale. Par conséquent, le courant augmente spontanément dans une direction dans l'électro-aimant double, immédiatement après que la boucle d'asservissement axial est en circuit, le rotor reposant initialement sur un palier d'appui.

Si le sens du courant est le sens convenable, lorsque le courant atteint un niveau suffisant, la force résultante créée par le double électro-aimant entraîne le rotor hors de sa position de repos, en surpassant les forces résultant de la combinaison de la rigidité axiale de l'anneau de centrage magnétique et de la force de la pesanteur appliquée sur la masse du rotor.

A partir du moment où il y a déplacement axial du rotor, le signal de vitesse axiale est présent et la boucle d'asservissement met le rotor dans la position d'équilibre dans laquelle le poids du rotor est compensé par l'attraction des anneaux de centrage magnétiques. Il n'y a passage de courant dans le double électro-aimant qu'autant qu'il est nécessaire pour compenser des perturbations externes telles que les petits mouvements au sol et la tension de bruit à l'entrée des amplificateurs électroniques. La valeur de ce courant est négligeable en valeur moyenne.

Si le courant qui s'écoule dans le double électro-aimant est initialement dans le sens non convenable, le courant tend à créer une force qui pousse le rotor davantage contre le palier d'appui empêchant le mouvement dans la direction axiale. Le courant s'accroît vers un niveau supérieur au niveau normal qui produit le décollement lorsqu'il est dans la direction convenable. Les circuits de la logique de décollement détectent cette situation et produisent l'inversion du courant dans le double électro-aimant. Ensuite, la situation devient la même que dans le premier cas dans lequel le courant était initialement dans la direction convenable.

Une variante de cette logique de décollement peut également être utilisée; elle fonctionne de la manière suivante: lorsque le courant s'accroît dans le double électro-aimant, la vitesse d'accroissement est bien définie de sorte qu'au lieu de détecter le niveau de courant qui devrait avoir produit le fonctionnement de décollement à partir d'une certaine valeur, et pour inverser la direction du courant, il est possible de laisser le courant s'accroître pendant un certain temps et s'il n'y a pas de décollement après ce délai, la logique de décollement inverse la direction du courant, et le fonctionnement global reste le même.

La configuration de base des anneaux de centrage radial apparaît à la figure 3. Les anneaux du rotor et du stator sont semblables. Le champ magnétique est produit par des anneaux d'aimants permanents 101, 102 et il est conduit par des couronnes en fer ou en acier magnétique à faible résistivité 103 et 104 sur les côtés opposés de l'anneau 101 associé au stator et par des couronnes en acier à haute résistivité (fer cobalt, fer amorphe, etc.) 105 et 106 sur les côtés opposés de l'anneau 102 au rotor vers l'entrefer où il est concentré.

Une autre configuration est présentée dans la figure 4. Le flux sort directement des anneaux magnétiques 107, 108, 109, 110 qui sont aimantés dans la même direction que l'axe du rotor. Les pièces 111, 112 ferment le flux magnétique aux extrémités des anneaux magnétiques opposées à l'entrefer.

Le double électro-aimant appelé également actuateur axial (voir figure 5) comprend deux armatures cylindriques 113, 114 dans lesquelles un fil de cuivre est enroulé en 115 et 116. Les armatures 113, 114 avec leur enroulement de cuivre sont attachées à l'arbre central fixe. Les pièces polaires 117, 118 sont fixées au rotor. Un aimant annulaire permanent 119 est placé entre elles et il est aimanté radialement. Le flux magnétique de l'anneau magnétique sort du pôle N de l'aimant annulaire et est divisé en deux parties. Une partie du flux entre dans l'armature supérieure 113 et l'autre partie dans l'armature inférieure 114. Lorsque les entrefers sont égaux, les deux flux sont égaux. En supposant que les bobines 115 et 116 sont connectées de la façon appropriée, lorsque le courant s'écoule dans les deux bobines, le flux magnétique, par exemple, s'accroît dans les entrefers 120, 121 et décroît dans les deux autres entrefers 122, 123. De cette façon, la force créée entre les pièces polaires 117, 118 de l'armature mobile et l'armature 113 est supérieure à la force créée entre les mêmes éléments mobiles et l'armature fixe 114. La force résultante est utilisée pour le fonctionnement de décollement du rotor et pour rendre stable la position d'équilibre naturellement instable du rotor par rapport au stator.

Le détecteur de vitesse axiale 27 schématisé sur la figure 1 est représenté en détail sur la figure 6. Selon cette forme de réalisation, un circuit magnétique est attaché à la partie rotor et lorsqu'un mouvement axial du rotor a lieu ce circuit magnétique induit une force électromotrice dans une double bobine fixée à la partie stator.

Le circuit magnétique est composé de l'anneau magnétique 124 aimanté axialement, des pièces polaires 125, 126 et de l'armature 127 qui ferme le flux magnétique de l'autre côté des entrefers. A l'intérieur des entrefers, un support cylindrique 128 est muni de deux bobines 129, 130. Le mouvement axial du circuit magnétique produit une force électromotrice dans les deux bobines, lesquelles sont reliées de telle façon que les forces électromotrices s'ajoutent.

La boucle d'asservissement axial étant en fonctionnement, le rotor est supporté sans contact mécanique avec le stator par les forces magnétiques des anneaux de centrage, et éventuellement avec une force additionnelle résultant du flux magnétique dû à l'aimant permanent se trouvant dans l'actuateur axial, si les entrefers 120, 121 ne sont pas égaux aux entrefers 122, 123, pour la position d'équilibre. Le rotor étant centré radialement par les actions magnétiques entre les anneaux de centrage, l'amortissement associé avec ces forces de rappel peut être insuffisant. L'amortissement existant est dû aux courants de Foucault et aux pertes par hystérésis provenant des variations du champ magnétique lorsqu'il y a un mouvement radial du rotor vis-à-vis du stator. Par conséquent, en fonction de la gamme de vitesses de rotation de l'équipement, il peut être utile d'introduire un amortissement additionnel pour éviter une excitation radiale du rotor éventuellement produite par les forces perturbatrices apparaissant dans toute la gamme des vitesses, en particulier au passage des différentes fréquences critiques.

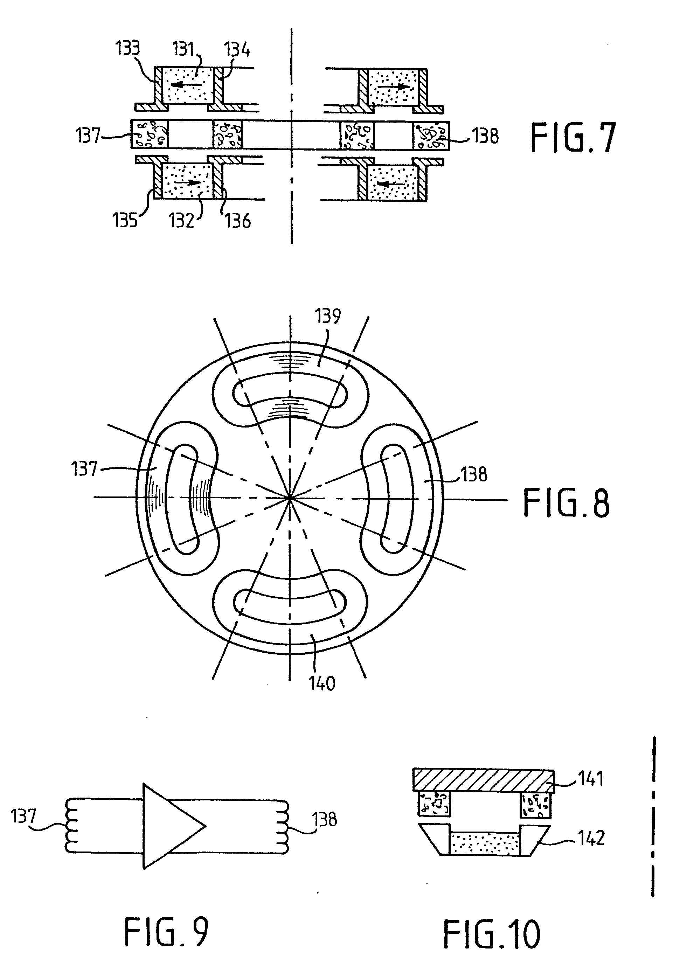

Dans le sous-ensemble d'amortissement montré aux figures 7 et 8 on voit deux aimants permanents annulaires 131, 132 qui sont fixés à la partie rotor avec leurs pièces polaires 133, 134, 135, 136. Les aimants permanents sont polarisés radialement. Ils envoient un flux magnétique à travers l'entrefer dans lequel sont placées quatre bobines 137, 138, 139, 140. Lorsque le rotor tourne autour de l'axe des anneaux de centrage coaxiaux avec les parties du sous-ensemble d'amortissement, les bobines ne sont pas soumises à des variations de champ magnétique ce qui fait qu'aucune force électromotrice n'est induite dans ces bobines. Lorsqu'une oscillation radiale est superposée à la rotation, une force électromotrice est induite dans les bobines. Si les bobines sont court-circuitées, il y a un courant induit qui produit un effet d'amortissement. Comme l'indique la figure 9, cet effet peut être amplifié en utilisant la force électromotrice induite dans la bobine 137 comme un signal d'entrée pour un amplificateur.

Dans le cas ou l'amplificateur n'est pas utile, les bobines peuvent être remplacées par une simple plaque de cuivre. C'est ainsi que suivant une variante de réalisation représentée sur la figure 10, une partie 141 du circuit magnétique est fixée avec les bobines, ou la plaque en cuivre, au stator. L'autre partie 142 du circuit magnétique est fixée au rotor. Dans un tel cas le circuit magnétique du système d'amortissement contribue au centrage radial passif et/ou au support du poids.

Il est évident aussi que dans le cas où on est amené à utiliser un amplificateur d'amortissement, les signaux d'entrée pour les amortisseurs du haut et du bas peuvent être obtenus à partir de tout capteur permettant d'obtenir la vitesse radiale du rotor lors de ses oscillations; das ce cas le courant peut être envoyé dans toutes les bobines telles que 137, 138, 139, 140. On peut en particulier utiliser des capteurs de déplacement et prendre la dérivée de ce paramètre par rapport au temps.

D'une façon générale, l'amortissement peut déjà être optimisé en augmentant l'énergie dissipée sur la partie statorique lors des mouvements d'excursion radiale du rotor. Les couronnes ferromagnétiques du stator sont avantageusement réalisées en matériau à faible résistivité électrique tel que le fer pur, éventuellement noyées dans un matériau bon conducteur et non magnétique tel que le cuivre ou l'aluminium. Les couronnes équivalentes sur le rotor sont au contraire en matériau ferromagnétique à haute résistivité et feuilleté (alliages fer cobalt, fer amorphe, etc.); elles seront noyées ou fixées dans un matériau isolant afin qu'il n'y ait pas de courants de Foucault induits dans leurs supports.

La suspension magnétique a besoin de paliers d'appuis sur lesquels repose le rotor lorsque les circuits actifs de la suspension magnétique ne sont pas en fonctionnement. Ce sous-système est constitué par des roulements à billes ayant des surfaces de contact appropriées permettant au rotor d'entrer en contact avec le stator par l'intermédiaire du système à roulement à billes.

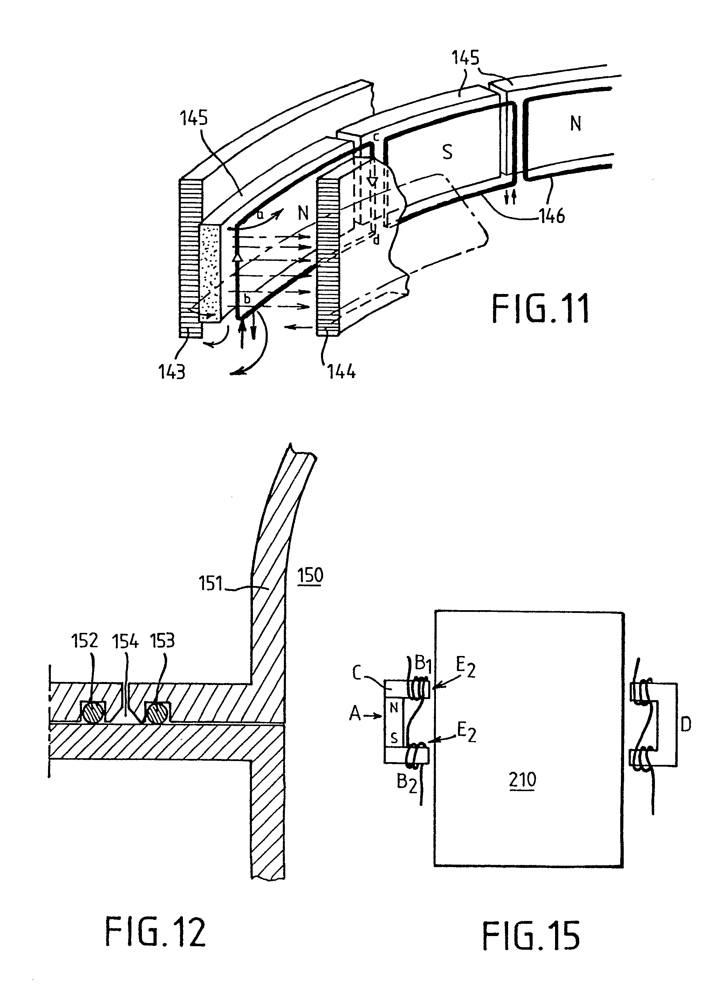

Le rotor est associé avec un moteur qui est du type à courant continu sans balais de contact et sans fer dans le stator, et avec commutation électronique. Une forme de construction est montrée à la figure 11. La structure à champ tournant consiste en deux anneaux en fer 143 et 144 qui sont lamellés lorsqu'il est nécessaire de réduire les pertes par courant de Foucault. Un ou deux de ces anneaux comportent douze aimants tels que 145 ayant des pôles magnétiques successivement opposés. Le nombre des paires d'aimants peut être adapté à chaque caractéristique particulière du moteur.

L'induit fixe comprend dix-huit bobines 146 de conducteurs isolés à plusieurs brins de faible diamètre pour éviter les courants de Foucault qui sont noyés dans une résine époxy ayant des renforcements mécaniques en fibres de verre. Le nombre des bobines peut être adapté au nombre d'aimants et/ou à la tension d'entrée. Plusieurs systèmes de commutation peuvent être utilisés, qui comprennent:

- une commutation photodiodes/phototransistors,
- une commutation par cellules à effet Hall, ou
- une commutation par détecteurs électromagnétiques.

Le système préféré de la présente invention qui n'exclut pas la possibilité d'utiliser les autres systèmes est un dispositif photo-électrique. Une source lumineuse par exemple une diode photo-électrique émettrice 29 sur la partie stator émet un flux permanent focalisé de lumière et un manchon à fenêtres 30 sur le rotor rencontre le flux de lumière qui est détecté par un phototransistor 31 sur le stator. Les impulsions de lumière sont utilisées pour déclencher le courant dans les différentes bobines en fonction de la position des aimants par rapport aux bobines. Un double jeu de sources lumineuses associées à des détecteurs photo-électriques est utilisé pour éviter toute incertitude à tout moment en ce qui concerne le niveau des signaux de commutation, surtout au début et à la fin des signaux.

Le moteur est monté à une extrémité du rotor. A l'autre extrémité du rotor, un générateur du même type que le moteur est installé comme le montre la figure 1. Le générateur fournit un courant alternatif qui est redressé si nécessaire. Pour des utilisations spéciales, le générateur peut être utilisé comme un second moteur afin de réaliser une plus grande accélération du rotor.

Dans le cas où le générateur a la même structure électromagnétique que le moteur, le résultat désiré peut être obtenu avec les mêmes détecteurs de commutation. De la même manière le moteur peut être utilisé comme un second générateur et ces conditions de fonctionnement permettent au dispositif de restituer l'énergie stockée avec une puissance de sortie plus élevée.

En fonction du niveau d'énergie qui a été stockée et des conditions de fonctionnement, le système peut travailler à une vitesse élevée dans le vide mais également à des vitesses plus faibles avec une énergie stockée plus faible. Par exemple un rotor, stockant assez d'énergie pour fournir 3 kW durant 20 minutes de puissance utile avec une vitesse principale de rotation de 12 000 tours/minute, peut délivrer 3 kW durant environ 1 minute 15 secondes avec au maximum 3000 tours/minute. Dans ces conditions, il peut fonctionner dans l'air ou dans un gaz à la pression atmosphérique (hélium par exemple). Les aimants et les bobines sont étudiés pour les conditions choisies de fonctionnement.

En fonction du niveau d'énergie qui doit être stockée et des conditions de fonctionnement, plusieurs configurations peuvent être adoptées pour le volant d'inertie.

La configuration nominale qui s'applique pour un équipement délivrant 1 kW durant 20 minutes ou la même énergie pour une période plus longue correspond à un fonctionnement dans le vide. Par conséquent, le système électromagnétique global avec les sous-systèmes décrits précédemment sont dans une enceinte à vide. Le même équipement est également utilisé pour obtenir une source d'alimentation éliminant les microcoupures du secteur et dans ce cas la fourniture de la même puissance durant une minute est suffisante; le même système peut alors fonctionner avec seulement un boîtier de protection et avec la pression atmosphérique à l'intérieur du boîtier.

Dans le cas où le vide est nécessaire, plusieurs configurations sont possibles pour maintenir le vide à l'intérieur après son établissement. La première réalisation consiste à fermer l'enceinte à vide par tout type de soudure (soudure par faisceau électronique, soudure à l'étain, etc.). Une solution qui permet le démontage de l'enceinte à vide pour toute intervention sur l'équipement apparaît en partie à la figure 12. Le couvercle 151 de l'enceinte à vide 150 est équipé de deux anneaux circulaires d'étanchéité 152, 153. Le volume d'air 154 entre ces anneaux est évacué et ensuite rempli d'une huile ayant une faible pression de vapeur. Une variante de ce système utilise une résine avec un catalyseur de polymérisation, telle que la résine époxy qui a également une faible pression de vapeur. Dans un tel cas pour permettre le démontage de l'enceinte à vide les surfaces de l'enceinte sont traitées par un produit évitant une forte adhérence de la résine sur l'enceinte. Les connexions électriques à travers les parois de l'enceinte sont effectuées par des connecteurs hermétiques tels que des passages étanches en verre soudés sur un conducteur en sa partie centrale et à l'enceinte à vide sur sa périphérie.

Une réalisation pratique du dispositif de la présente invention contient un rotor en acier de 370 kg tournant à 12 000 tours/minute. L'expérience a montré la possibilité de stocker dans une telle réalisation 1 kW/heure d'énergie utile qui peut être fournie en 20 minutes avec une puissance de 3 kW ou bien dans une période plus longue avec une puissance de 3 kW ou bien dans une période plus longue avec une puissance plus faible ou dans une période plus courte avec une puissance plus grande allant jusqu'à 10 kW pour le mode de réalisation concerné.

Il est évident que la même réalisation peut être utilisée pour stocker une quantité plus faible d'énergie tout en restant dans le cadre de la présente invention. Des réalisations plus grandes et plus petites peuvent être étudiées selon les mêmes principes de base en restant dans le cadre de la présente invention. Toutes les modifications qui peuvent être introduites selon l'activité de l'homme de métier restent dans le cadre de la présente invention; ce sont, par exemple, l'utilisation d'un simple moteur-générateur ou d'un nombre différent d'anneaux de centrage, d'un nombre différent d'aimants ou de bobines pour le moteur, etc.

L'adaptation d'un rotor composite reste dans le cadre de la présente invention; il permettra un accroissement de l'énergie stockée. Un tel rotor peut être avantageusement du type décrit dans les brevets français 77 23981 du 3 Août 1977, 78 24955 du 29 Août 1978, 79 13698 du 19 Mai 1979 et 81 07465 du 14 Avril 1981.

Des combinaisons de toutes les configurations dont on discute ci-dessus peuvent être utilisées dans la présente invention.

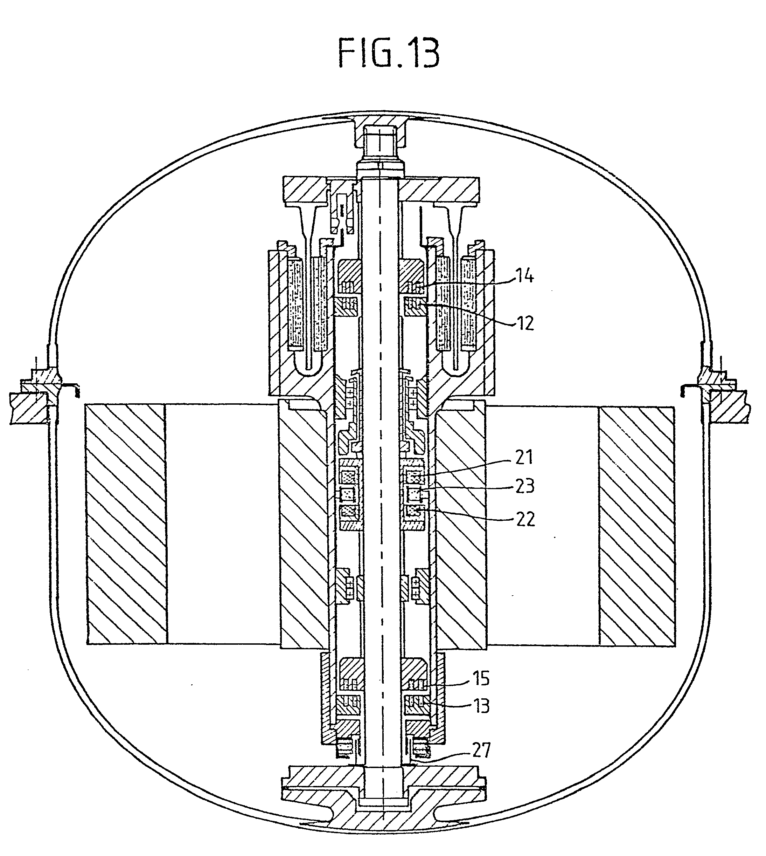

Une configuration possible est représentée à la figure 13 dans laquelle le moteur est également le générateur, les éléments constitutifs étant analogues, sous plusieurs aspects, aux formes de réalisation de la figure 1.

D'autres considérations de structure, en fonction des dimensions du rotor, peuvent exister; le rotor peut être placé entre les paliers magnétiques supérieur et inférieur ou il peut être placé à l'extérieur, en-dessous du palier inférieur. De la même manière, le moteur peut être placé soit en-dessous du palier inférieur, soit au-dessus du palier supérieur. Lorsqu'un rotor en acier est utilisé, la vitesse et par conséquent l'énergie peuvent être accrues par le bobinage d'un matériau composite, d'une grande résistance à la traction et de faible densité, enroulé ou précontraint sur le rotor, comme avec l'utilisation de fibres de verre, fibres de carbone, ou fibres de polymère qui peuvent être noyées dans la résine.

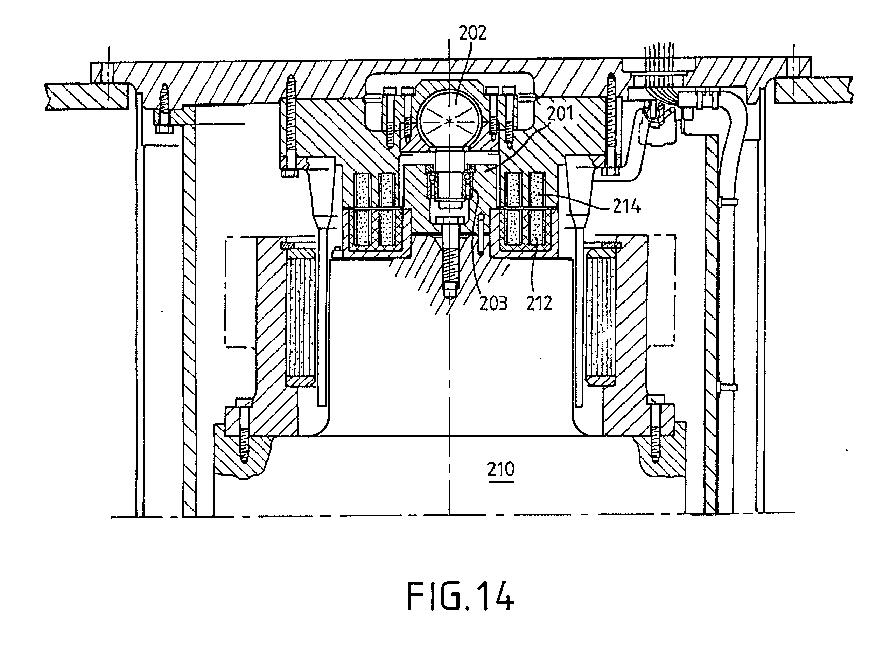

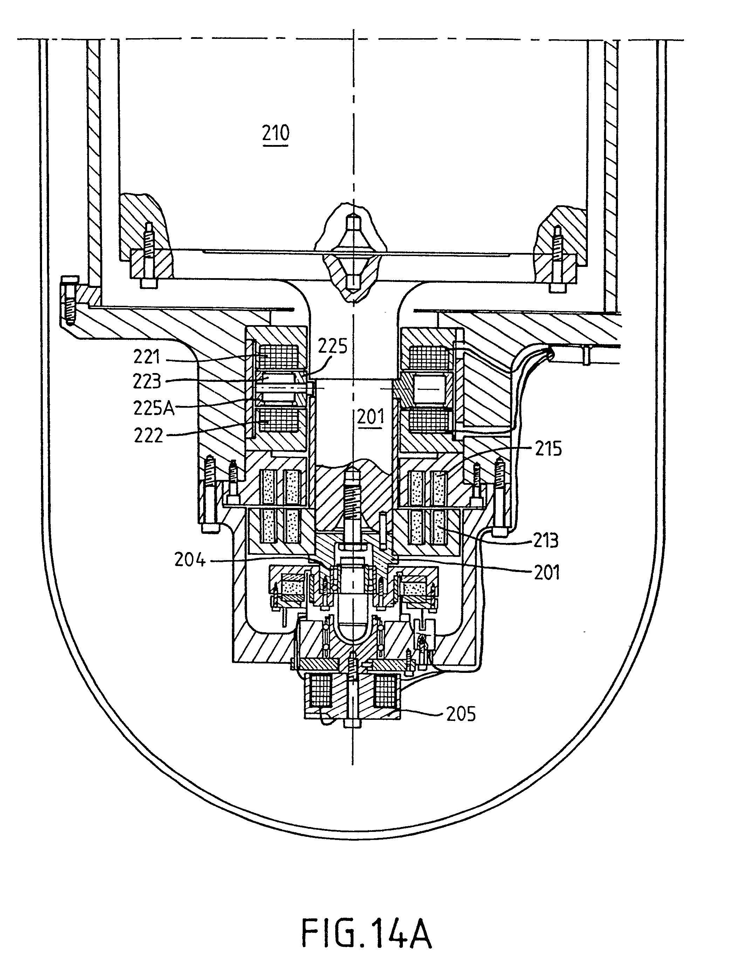

La configuration d'ensemble peut faire l'objet d'une variante selon les figures 14 et 14A. Au lieu que le rotor soit alésé dans sa partie centrale et laisse le passage d'un arbre fixe solidarisant axialement les parties haute et basse du carter, le rotor 210 peut être plein dans sa partie centrale. L'arbre 201 associé au rotor est alors tournant et porte à sa partie supérieure une rotule 202 montée sur roulement à billes 203. Lorsque l'équipement n'est pas en fonctionnement, c'est-à-dire lorsque la suspension magnétique axiale n'est pas sous tension, le contact mécanique entre partie fixe et partie tournante s'effectue au niveau de la rotule 202.

Les anneaux magnétiques de centrage 212, 213 du rotor sont fixés à l'ensemble tournant: rotor 210 – arbre 201 et les anneaux magnétiques 214, 215 sont fixés au stator. On retrouve également l'électro-aimant double 221 et 222 fixé alors au stator dont le circuit magnétique est polarisé par l'anneau magnétique permanent 223 dans l'armature mobile 225–225A fixée alors à l'arbre tournant 201.

Un dispositif complémentaire est installé à la partie inférieure. Il permet de faire tourner le rotor entre deux roulements à billes: celui du haut 203 associé à la rotule et un roulement inférieur 204, le jeu mécanique à son niveau étant annulé par l'action d'un électro-aimant 205.

Ce dispositif permet de maintenir le rotor centré dans le cas d'activité sismique. Il permet en outre d'éviter les mouvements du rotor par rapport au stator lors d'un transport.

En d'autres termes quand l'arbre est fixe le rotor est alésé et quand l'arbre est tournant il tourne avec le rotor qui peut alors être plein, les prolongements de l'arbre tournant extérieurs au rotor pouvant être mis à profit pour coopérer avec tout dispositif magnétique ou éllectromagnétique associé.

Toutefois, afin de ne pas allonger démesurément l'ensemble rotorique, les dispositifs d'amortissement radiaux sont réalisés différemment (figure 15) par rapport au mode de réalisation décrit précédemment.

Un circuit magnétique polarisé par un aimant A se referme au travers de deux entrefers $E_1$, $E_2$ sur le rotor 210 en acier. Lorsque le rotor est animé d'un mouvement d'excursion radiale, par exemple au passage d'une fréquence critique, les entrefers $E_1$, $E_2$ varient et la variation du champ magnétique provoque une force électromotrice dans des bobinages $B_1$, $B_2$. Cette force électromotrice est appliquée à l'entrée d'un amplificateur qui envoie un courant proportionnel à la force électromotrice dans un circuit magnétique D. Il est ainsi possible de créer simplement une force opposée à la vitesse d'excursion radiale du rotor. Selon les caractéristiques de ce rotor il peut y avoir un système de ce genre sensiblement au milieu de la hauteur du rotor, au niveau du centre de gravité ou bien un à chaque extrémité.

La détection de la vitesse radiale peut être effectuée par tout autre système, par exemple par détecteur capacitif, ou à courant de Foucault, etc.

Il est évident que la présente invention n'a été décrite et représentée qu'à titre préférentiel et qu'on pourra apporter des équivalences dans ses éléments constitutifs en fonction des secteurs d'activité sans pour autant sortir du cadre de ladite invention, lequel est défini dans les revendications annexées.

**Revendications**

1. Equipement à volant d'inertie comme source d'énergie sans coupure stockant de l'énergie sous forme cinétique, l'énergie étant introduite et restituée sous forme électrique, du type comprenant, dans une enceinte, un rotor (10) suspendu magnétiquement par rapport à un stator (20), un volant d'inertie faisant partie du rotor (10), un dispositif d'amortissement (16–19) pour empêcher des excursions radiales excessives du rotor (10) et comportant des aimants permanents opposés (16–17) et un élément de centrage (18–19) passant entre eux, un moteur (40) et un générateur (50), des paliers d'appui (50) entre le stator (10) et le rotor (20) pour supporter le rotor (10) lorsque celui-ci n'est pas suspendu magnétiquement, le dispositif pour suspendre magnétiquement le rotor (10) et le maintenir en équilibre par rapport au stator (20) comprenant:

– un ensemble (12–15) de centrage magnétique radial passif comportant des aimants permanents annulaires (14, 15) sur le stator (20) opposés à un nombre équivalent d'aimants permanents annulaires (12, 13) sur le rotor (10),

– un ensemble de centrage magnétique axial actif (21–23; 115, 116, 119) formé d'un électro-aimant et d'un aimant permanent annulaire (23, 119),

– un détecteur de vitesse axiale (27) et,

– une boucle d'asservissement (27, 28, 21′, 22′) reliant les bobines électromagnétiques de l'ensemble de centrage magnétique axial avec les bobines du détecteur de la vitesse axiale (27) pour maintenir le rotor (10) entre ses paliers d'appui (50),

– cet équipement étant caractérisé en ce que, le rotor (10) étant placé dans un champ de gravité non compensé par une force centrifuge,

– les aimants permanents annulaires (12–15) de l'ensemble de centrage magnétique radial passif sont disposés en sorte d'exercer sur le rotor (10) une force axiale permanente de soulèvement à l'encontre de la gravité,

– l'ensemble de centrage magnétique axial actif est formé d'un double électro-aimant, et l'aimant permanent annulaire (23, 119) est monté sur le rotor (10) entre deux bobines électromagnétiques (21, 22, 115, 116) montées sur le stator (20),

– le détecteur de vitesse axiale (27) du rotor (10) comporte un circuit magnétique cylindrique (124, 125, 126, 127) attaché au rotor (10) et dans l'entrefer duquel est logé un cylindre (128) à deux bobines (129, 130) fixé au stator (20), tout mouvement axial du circuit magnétique produisant des forces électromotrices qui s'ajoutent dans les deux bobines et,

– la boucle d'asservissement (27, 28, 21′, 22′) comporte des moyens logiques de contrôle de décollage (28) capables, lorsque le rotor (10) est en appui sur l'un des paliers d'appui (50), de commander un courant dans cette boucle (27, 28, 21′, 22′), à partir de la réaction du détecteur de vitesse axiale (27) dans un sens propre à dégager effectivement le rotor (10) vis-à-vis de ce palier d'appui (50) sur lequel il repose.

2. Equipement selon la revendication 1, caractérisé en ce que l'arbre est fixe et que le rotor (10) est alésé, lesdits dispositifs magnétiques et électromagnétiques associés (12 – 13 – 14 – 15 – 21 – 22 – 23 – 16 – 17 – 18 – 19) étant disposés dans l'alésage entre l'arbre fixe et le rotor (10).

3. Equipement selon la revendication 1, caractérisé en ce que l'arbre (201) est tournant et tourne avec le rotor (210), les prolongements de l'arbre tournant, extérieurs au rotor, étant mis à profit pour recevoir les éléments tournants (212 – 213 – 223) desdits dispositifs magnétiques et électromagnétiques dont les éléments fixes (214 – 215 – 221 – 222) sont reliés au stator.

4. Equipement selon la revendication 3, caractérisé en ce que le prolongement supérieur de l'arbre tournant (201) porte une rotule (202) montée sur roulements (203) et qui, en l'absence de suspension axiale, réalise le contact mécanique avec la partie fixe.

5. Equipement selon l'une quelconque des revendications 3 et 4, caractérisé en ce qu'un autre roulement (204) est prévu sur le prolongement inférieur de l'arbre tournant (201), le jeu mécanique à ce niveau étant annulé par l'action d'un électro-aimant (205) pour certaines conditions de fonctionnement.

6. Equipement selon l'une quelconque des revendications 3 à 5, caractérisé en ce que, pour ne pas allonger démesurément l'ensemble rotorique (210): rotor-arbre, les dispositifs électromagnétiques associés, en particulier au système d'amortissement des oscillations radiales (A, D, $B_1$, $B_2$) sont disposés à l'extérieur le long de la génératrice du rotor (210).

7. Equipement selon la revendication 6, caractérisé en ce que le dispositif d'amortissement radial est prévu en un point quelconque de la génératrice du rotor (210) et comprend un circuit magnétique polarisé (A, $B_1$, $B_2$) se refermant au travers de deux entrefers ($E_1$, $E_2$) sur le rotor (210), toute variation lesdits entrefers ($E_1$, $E_2$) se traduisant par une variation de champ magnétique.

8. Equipement selon l'une quelconque des revendications 1 à 7, caractérisé en ce que les moyens logiques de contrôle de décollage (28) produisent une inversion du circuit dans les bobines électromagnétiques (21′, 22′, 21, 22, 115, 116) lorsque le courant de celles-ci atteint un niveau prédéterminé.

9. Equipement selon l'une quelconque des revendications 1 à 7, caractérisé en ce que les moyens logiques de contrôle de décollage (28) produisent une inversion du courant dans les bobines électromagnétiques (21′, 22′, 21, 22, 115, 116) lorsque le courant dans celles-ci s'est accru pendant une période de temps prédéterminée sans que le détecteur de vitesse ne détecte de mouvement axial.

10. Equipement selon l'une quelconque des revendications 1 à 9, caractérisé en ce que le détecteur de vitesse axiale comporte un aimant annulaire (124) d'aimantation (N.S) axiale attaché au rotor, associé à des pièces polaires (125 – 126 – 127) fermant le flux magnétique de part et d'autre de bobines (129 – 130) liées au stator et placées dans l'entrefer constitué entre les pièces polaires (125, 126, 127).

11. Equipement selon l'une quelconque des revendications 1 à 10, caractérisé en ce que le moteur et le générateur sont incorporés dans une seule unité n'ayant qu'un seul induit (146) et qu'un seul inducteur (143, 144, 145).

12. Equipement selon l'une quelconque des revendications 1 à 10, caractérisé en ce que le moteur et le générateur comportent un moteur (146, 143, 144, 145) à une extrémité axiale du rotor (10) et du stator, et un générateur (143, 144, 145, 146) à l'autre extrémité axiale du rotor (10) et du stator.

13. Equipement selon l'une quelconque des revendications 1 à 10, caractérisé en ce que le moteur et le générateur comportent un moteur (146, 143, 144, 145) séparé et un générateur (143, 144, 145, 146) séparé reliés de façon à agir comme deux moteurs pour obtenir un accroissement de la puissance de rotation du rotor et comme deux générateurs pour obtenir un accroissement de puissance et un accroissement de la durée de la fourniture de puissance.

14. Equipement selon l'une quelconque des revendications 1 à 13, caractérisé en ce que l'enceinte (150) est scellée hermétiquement et s'étend avantageusement en-dessous de la surface du sol.

15. Equipement selon l'une quelconque des revendications 1 à 13, caractérisé en ce que l'enceinte (150) est scellée hermétiquement et comporte au moins deux parties (151) entre lesquelles est disposée une paire d'anneaux espacés d'étanchéité (152, 153) tandis qu'une matière ayant une faible pression de vapeur remplit l'espace (154) entre lesdits anneaux d'étanchéité.

16. Equipement selon la revendication 15, caractérisé en ce que la matière ayant une faible pression de vapeur est une huile.

17. Equipement selon la revendication 15, caractérisé en ce que la matière ayant une faible pression de vapeur est une résine.

18. Equipement selon la revendication 17, caractérisé en ce que les surfaces de l'enceinte voisines de la matière ayant une faible pression de vapeur sont traitées avec une matière évitant une adhérence trop vive de la résine pour les surfaces de façon à pouvoir démonter le boîtier.

19. Equipement selon la revendication 1, caractérisé en ce que le système d'amortissement comporte un amplificateur (137 – 138 ou 139 – 140) qui fonctionne pendant des périodes prédéterminées.

20. Equipement selon la revendication 1, caractérisé en ce que le rotor (10–210) est réalisé en matériau composite.

**Claims**

1. Equipement using a flywheel as an uninterruptible power source storing energy in the form of kinetic energy where the power input and output are in electrical form, of the type comprising, in an enclosure, a rotor (10) suspended magnetically relative to a stator (20), a flywheel forming part of the rotor (10), a damper device (16–19) for preventing excessive radial excursions of the rotor (10) and comprising opposed permanent magnets (16–17) and a centering member (18–19) passing between them, a motor (40) and a generator (50), bearings (50) between the stator (10) and the rotor (20) to support the rotor (10) when it is not suspended magnetically, the device for magnetically suspending the rotor (10) and holding it in equilibrium relative to the stator (20) comprising:
– a passive radial magnetic centering system (12–15) comprising annular permanent magnets (14, 15) on the stator (20) opposite an equivalent number of annular permanent magnets (12, 13) on the rotor (10),
– an active axial magnetic centering system (21–23; 115, 116, 119) formed by an electromagnet and an annular permanent magnet (23, 119),
– an axial speed sensor (27) and,
– a servo loop (27, 28, 21', 22') linking the electromagnetic windings of the axial magnetic centering system with the windings of the axial speed sensor (27) to maintain the rotor (10) between its bearings (50),
– this equipment being characterised in that, the rotor (10) being located in a gravity field that is not compensated by a centrifugal force,
– the annular permanent magnets (12–15) of the passive radial magnetic centering system are disposed so as to exert on the rotor (10) a permanent axial lifting force opposing gravity,
– the active axial magnetic centering system is formed by a double electromagnet and the annular permanent magnet (23, 119) is mounted on the rotor (10) between two electromagnetic windings (21, 22, 115, 116) mounted on the stator (20),
– the axial speed sensor (27) of the rotor (10) comprises a cylindrical magnetic circuit (124, 125, 126, 127) attached to the rotor (10) and in the airgap of which is accommodated a cylinder (128) with two windings (129, 130) fixed to the stator (20), any axial movement of the magnetic circuit producing electromotive forces which add in the two windings and,
– the servo loop (27, 28, 21', 22') comprises lift-off control logic means (28) capable, when the rotor (10) is bearing on one of the bearings (50), of controlling a current in this loop (27, 28, 21', 22') on the basis of the reaction of the axial speed sensor (27) in a direction adapted effectively to free the rotor (10) from the bearing (50) on which it is resting.

2. Equipment according to claim 1, characterised in that the shaft is fixed and in that the rotor (10) is bored out, said associated magnetic and electromagnetic devices (12 – 13 – 14 – 15 – 21 – 22 – 23 – 16 – 17 – 18 – 19) being disposed in the bore between the fixed shaft and the rotor (10).

3. Equipment according to claim 1, characterised in that the shaft (201) is rotatable and rotates with the rotor (210), extensions of the rotating shaft externally of the rotor being used to accommodate the rotating members (212 – 213 – 223) of said magnetic and electromagnetic devices the fixed members (214 – 215 – 221 – 222) of which are connected to the stator.

4. Equipment according to claim 3, characterised in that the upper extension of the rotating shaft (201) carries a ball joint (202) mounted on bearings (203) and which, in the absence of any axial suspension, implements the mechanical contact with the fixed part.

5. Equipment according to either of claims 3 and 4, characterised in that another bearing (204) is provided on the lower extension of the rotating shaft (201), mechanical clearance at this level being eliminated for certain operating conditions by the action of an electromagnet (205).

6. Equipment according to any one of claims 3 through 5, characterised in that, in order to avoid excessive elongation of the rotor assembly (210): rotor-shaft, the electromagnetic devices associated in particular with the systems for damping radial oscillation (A, D, $B_1$, $B_2$) are disposed externally along the generatrix of the rotor (210).

7. Equipment according to claim 6, characterised in that the radial damping device is provided at any point on the generatrix of the rotor (210) and comprises a polarised magnetic circuit

(A, B$_1$, B$_2$) completed by two airgaps (E$_1$, E$_2$) on the rotor (210), any variation in said airgaps (E$_1$, E$_2$) resulting in a variation of magnetic field.

8. Equipement according to any one of claims 1 through 7, characterised in that the lift-off control logic means (28) procure a reversal of the circuit in the electromagnetic windings (21', 22', 21, 22, 115, 116) when the current in these reaches a predetermined level.

9. Equipment according to any one of claims 1 through 7, characterised in that the lift-off control logic means (28) procure a reversal of the current in the electromagnetic windings (21', 22', 21, 22, 115, 116) when the current in these has increased during a predetermined time interval without the speed sensor detecting axial movement.

10. Equipment according to any of one of claims 1 through 9, characterised in that the axial speed sensor comprises an annular magnet (124) which is axially magnetised (N.S) attached to the rotor, associated with polepieces (124 – 126 – 127) closing the magnetic flux circuit on either side of windings (129 – 130) connected to the stator and placed in the airgap formed between the polepieces (125, 126, 127).

11. Equipment according to any one of claims 1 through 10, characterised in that the motor and the generator are incorporated in a single unit having only one armature (146) and one field winding (143, 144, 145).

12. Equipment according to any one of claims 1 through 10, characterised in that the motor and the generator comprise a motor (146, 143, 144, 145) at one axial end of the rotor (10) and of the stator and a generator (143, 144, 145, 146) at the other axial end of the rotor (10) and of the stator.

13. Equipment according to any one of claims 1 through 10, characterised in that the motor and the generator comprise a separate motor (146, 143, 144, 145) and a separate generator (143, 144, 145, 146) linked so as to operate as two motors in order to obtain an increase in the rotation power of the rotor and as two generators in order to obtain a power increase and in increase in the duration for which power is supplied.

14. Equipment according to any one of claims 1 through 13, characterised in that the enclosure (150) is hermetically sealed and is advantageously below ground level.

15. Equipment according to any one of claims 1 through 13, characterised in that the enclosure (150) is hermetically sealed and comprises at least two parts (151) between which there is disposed a pair of spaced sealing rings (152, 153) while a material having a low vapour pressure fills the space (154) between said sealing rings.

16. Equipment according to claim 15, characterised in that the material having a low vapour pressure is an oil.

17. Equipment according to claim 15, characterised in that the material having a low vapour pressure is a resin.

18. Equipment according to claim 17, characterised in that the surfaces of the enclosure adjacent the material having a low vapour pressure are treated with a material preventing excessively strong adhesion of the resin for the surfaces so as to make it possible to demount the casing.

19. Equipment according to claim 1, characterised in that the damper system comprises an amplifier (137 – 138 or 139 – 140) which function during predetermined periods.

20. Equipment according to claim 1, characterised in that the rotor (10 – 210) is made of a composite material.

**Patentansprüche**

1. Ausrüstung mit einem Schwungrad als unterbrechungsfreie Energiequelle, die Energie in kinetischer Form speichert, wobei die Energie in elektrischer Form zugeführt und wiedergewonnen wird, von der Art, die in einem Gehäuse einen mit Bezug auf einen Stator (2) magnetisch aufgehängten Rotor (10), ein einen Teil des Rotors (10) bildendes Schwungrad, eine Dämpfungsvorrichtung (16–19) zur Verhinderung zu grosser radialer Abweichungen des Rotors (10), die einander gegenüberliegende Permanentmagnete (16–17) und ein zwischen ihnen durchgehendes Zentrierelement (18–19) aufweist, einen Motor (40) und einen Generator (50), sowie Abstützlager (50) zwischen dem Stator (10) und dem Rotor (20) zur Abstützung des Rotors (10) enthält, wenn dieser nicht magnetisch aufgehängt ist, wobei die Einrichtung zur magnetischen Aufhängung des Rotors (10) und zur Aufrechterhaltung seines Gleichgewichtes mit Bezug auf den Stator (20)

– eine Einheit (12–15) zur passiven radialen magnetischen Zentrierung umfasst, die auf dem Stator ringförmige Permanentmagnete (14, 15) aufweist, die einer gleichen Anzahl ringförmiger Permanentmagnete (12, 13) auf dem Rotor (10) gegenüberliegen,

– eine aus einem Elektromagneten und einem ringförmigen Permanentmagneten (23, 119) gebildete Einheit (21–23; 115, 116, 119) zur aktiven magnetischen Axialzentrierung,

– einen Axialgeschwindigkeitsdetektor (27) und

– eine Servo-Schleife (27, 28, 21', 22') enthält, die die Elektromagnetspulen der Einheit zur magnetischen Axialzentrierung mit den Spulen des Axialgeschwindigkeitsdetektors (27) verbindet, um den Rotor (10) zwischen seinen Abstützlagern (50) zu halten,

– welche Ausrüstung dadurch gekennzeichnet ist, dass bei Anordnung des Rotors (10) in einem nicht durch eine Zentrifugalkraft kompensierten Gravitationsfeld

– die ringförmigen Permanentmagnete (12–15) der Einheit zur passiven radialen magnetischen Zentrierung so angeordnet sind, dass auf den Rotor (10) eine ständige axiale Anhebekraft gegen die Wirkung der Schwerkraft ausgeübt wird,

– die Einheit zur aktiven magnetischen Axialzentrierung aus einem doppelten Elektromagneten gebildet ist und der ringförmige Permanentmagnet (23, 119) auf dem Rotor (10) zwischen zwei auf dem Stator (20) angeordneten Elektromagnetspulen (21, 22, 115, 116) angeordnet ist,

– der Axialgeschwindigkeitsdetektor (27) des Rotors (10) einen am Rotor (10) befestigten zylindrischen Magnetkreis (124, 125, 126, 127) aufweist, in dessen Spalt ein am Stator (20) befestigter Zylinder (128) mit zwei Spulen (129, 130) angeordnet ist, wobei jede Axialbewegung des Magnetkreises elektromotorische Kräfte erzeugt, die in den beiden Spulen addiert werden, und

– die Servo-Schleife (27, 28, 21', 22') logische Mittel (28) zur Abhebesteuerung aufweist, die geeignet sind, bei Abstützen des Rotors (10) auf einem der Abstützlager (50) ausgehend von der Reaktion des Axialgeschwindigkeitsdetektors (27) in einem zum tatsächlichen Freikommen des Rotors (1) vom Abstützlager (50), auf dem er ruht, geeigneten Sinn einen Strom in diese Schleife (27, 28, 21', 22') zu schicken.

2. Ausrüstung nach Anspruch 1, dadurch gekennzeichnet, dass die Welle fest ist und dass der Rotor (10) eine Bohrung aufweist, wobei die genannten zugehörigen magnetischen und elektromagnetischen Einrichtungen (12 – 13 – 14 – 15 – 21 – 22 – 23 – 26 – 17 – 18 – 19) in der Bohrung zwischen der festen Welle und dem Rotor (10) angeordnet sind.

3. Ausrüstung nach Anspruch 1, dadurch gekennzeichnet, dass die Welle (201) eine Drehwelle ist und sich mit dem Rotor (210) dreht, wobei die ausserhalb des Rotors liegenden Verlängerungen der Drehwelle zur Aufnahme der umlaufenden Elemente (212 – 213 – 223) der genannten magnetischen und elektromagnetischen Einrichtungen dienen, deren feste Elemente (214 – 215 – 221 – 222) mit dem Stator verbunden sind.

4. Ausrüstung nach Anspruch 3, dadurch gekennzeichnet, dass die obere Verlängerung der Drehwelle (201) ein auf Lagern (203) befestigtes Gelenk (202) trägt, das bei Abwesenheit einer axialen Aufhängung den mechanischen Kontakt mit dem festen Teil bewirkt.

5. Ausrüstung nach einem der Ansprüche 3 und 4, dadurch gekennzeichnet, dass auf der unteren Verlängerung der Drehwelle (201) ein weiteres Lager (204) vorgesehen ist, wobei das mechanische Spiel in dieser Höhe für bestimmte Arbeitsbedingungen durch die Wirkung eines Elektromagneten (205) aufgehoben ist.

6. Ausrüstung nach einem der Ansprüche 3 bis 5, dadurch gekennzeichnet, dass, um die Rotoreinheit (210): Rotor-Welle nicht übermässig zu verlängern, die zugehörigen elektromagnetischen Einrichtungen, insbesondere bei Systemen zur Dämpfung radialer Schwingungen (A, D, B$_1$, B$_2$), aussen entlang der Mantellinie des Rotors (210) angeordnet sind.

7. Ausrüstung nach Anspruch 6, dadurch gekennzeichnet, dass die Radialdämpfungseinrichtung an einem beliebigen Punkt der Mantellinie des Rotors (210) vorgesehen ist und einen polarisierten Magnetkreis (A, B$_1$, B$_2$) aufweist, der sich quer durch zwei Spalte (E$_1$, E$_2$) am Rotor (210) wieder schliesst, wobei jede Veränderung der genannten Spalte (E$_1$, E$_2$) eine Veränderung des Magnetfeldes hervorruft.

8. Ausrüstung nach einem der Ansprüche 1 bis 7, dadurch gekennzeichnet, dass die logischen Mittel (28) zur Abhebesteuerung eine Umkehrung des Stromkreises in den elektromagnetischen Spulen (21', 22', 21, 22, 115, 116) hervorrufen, wenn der Strom in den Spulen ein vorherbestimmtes Niveau erreicht.

9. Ausrüstung nach einem der Ansprüche 1 bis 7, dadurch gekennzeichnet, dass die logischen Mittel (28) zur Abhebesteuerung eine Umkehrung des Stromes in den elektromagnetischen Spulen (21', 22', 21, 22, 115, 116) hervorrufen, wenn der Strom in den Spulen während einer vorherbestimmten Zeitspanne angestiegen ist, ohne dass der Geschwindigkeitsdetektor eine Axialbewegung festgestellt hat.

10. Ausrüstung nach einem der Ansprüche 1 bis 9, dadurch gekennzeichnet, dass der Axialgeschwindigkeitsdetektor einen am Rotor befestigten Ringmagneten (124) mit axialer Magnetisierung (N.S) aufweist, der mit Polstücken (125 – 126 – 127) verbunden ist, die den Magnetfluss beidseits von Spulen (129 – 130) schliessen, die mit dem Stator verbunden und in dem zwischen den Polstücken (125, 126, 127) bestehenden Spalt angebracht sind.

11. Ausrüstung nach einem der Ansprüche 1 bis 10, dadurch gekennzeichnet, dass der Motor und der Generator in einer einzigen Einheit inkorporiert sind, die nur einen einzigen Anker (146) und nur einen einzigen Induktor (143, 144, 145) besitzt.

12. Ausrüstung nach einem der Ansprüche 1 bis 10, dadurch gekennzeichnet, dass der Motor und der Generator einen Motor (146, 143, 144, 145) an einem Axialende des Rotors (10) und des Stators und einen Generator (143, 144, 145, 146) am anderen Axialende des Rotors (10) und des Stators aufweisen.

13. Ausrüstung nach einem der Ansprüche 1 bis 10, dadurch gekennzeichnet, dass der Motor und der Generator einen getrennten Motor (146, 143, 144, 145) und einen getrennten Generator (143, 144, 145, 146) aufweisen, die so miteinander verbunden sind, dass sie als zwei Motoren arbeiten, um eine Erhöhung der Drehleistung des Rotors zu erreichen, und als zwei Generatoren, um eine Erhöhung der Leistung und eine Erhöhung der Dauer der Leistungslieferung zu erreichen.

14. Ausrüstung nach einem der Ansprüche 1 bis 13, dadurch gekennzeichnet, dass das Gehäuse (150) hermetisch verschlossen ist und sich vorteilhafterweise unter der Bodenoberfläche befindet.

15. Ausrüstung nach einem der Ansprüche 1 bis 13, dadurch gekennzeichnet, dass das Gehäuse (150) hermetisch verschlossen ist und mindestens zwei Teile (151) aufweist, zwischen denen ein Paar mit Abstand angeordneter Dichtungsringe (152, 153) angeordnet ist, während ein Material niedrigen Dampfdruckes den Raum (154) zwischen den genannten Dichtungsringen ausfüllt.

16. Ausrüstung nach Anspruch 15, dadurch gekennzeichnet, dass das Material niedrigen Dampfdruckes ein Öl ist.

17. Ausrüstung nach Anspruch 15, dadurch gekennzeichnet, dass das Material niedrigen Dampfdruckes ein Harz ist.

18. Ausrüstung nach Anspruch 17, dadurch gekennzeichnet, dass die dem Material niedrigen Dampfdruckes benachbarten Oberflächen des Gehäuses mit einem Material behandelt sind, das ein zu starkes Haften des Harzes an den Oberflächen verhindert, damit das Gehäuse demontiert werden kann.

19. Ausrüstung nach Anspruch 1, dadurch gekennzeichnet, dass das Dämpfungssystem einen Verstärker (137 – 138 oder 139 – 140) aufweist, der während vorherbestimmter Perioden arbeitet.

20. Ausrüstung nach Anspruch 1, dadurch gekennzeichnet, dass der Rotor (10 – 210) aus zusammengesetzem Material besteht.

# FIG.1

# FIG.2

# FIG.3

# FIG.4

# FIG.5

# FIG.6

FIG.7

FIG.8

FIG.9

FIG.10

FIG.11

FIG.12

FIG.15

# FIG.13

FIG.14

210

221
223
225A
222

225

201

215

204

213

201

205

FIG.14A